# EUROPÄISCHE PATENTSCHRIFT

(11) **EP 3 367 960 B1**
(45) Veröffentlichungstag und Bekanntmachung des Hinweises auf die Patenterteilung: **11.08.2021**
(21) Anmeldenummer: 16787842.0
(22) Anmeldetag: 26.10.2016
(51) Int. Cl.: A61C 8/00, A61C 9/00

(54) **SCANABUTMENT FÜR EIN DENTALIMPLANTAT MIT REDUZIERUNG DES PASSUNGSSPIELS**
SCAN ABUTMENT FOR A DENTAL IMPLANT HAVING REDUCTION OF THE FIT CLEARANCE
PILIER DE SCANNAGE POUR IMPLANT DENTAIRE AVEC RÉDUCTION DE LA TOLÉRANCE D'AJUSTEMENT

(30) Priorität: 27.10.2015 DE 102015118286
(43) Veröffentlichungstag der Anmeldung: 05.09.2018
(73) Patentinhaber: Kulzer GmbH, 63450 Hanau (DE)
(72) Erfinder: FUNK, Matthias, 63456 Hanau (DE)
(74) Vertreter: Bendele, Tanja
(86) Internationale Anmeldenummer: PCT/EP2016/075791
(87) Internationale Veröffentlichungsnummer: WO 2017/072169

(56) Entgegenhaltungen:
- EP-A1- 0 180 247
- DE-A1-102013 101 879
- US-A- 5 782 918
- US-A1- 2006 217 738

## Beschreibung

Die Erfindung betrifft ein integral gefertigtes Scanabutment zur Bestimmung der Lage der Stirnseite und der Lage/Richtung der Längsachse eines dentalen enossalen Implantates, wobei das Abutment einen länglichen, hohlen Schaft aufweist, und der Schaft einen oberen Bereich, einen mittleren Bereich und einen unteren Bereich aufweist. Ferner ist der Schaft des Scanabutments mit seinem mittleren Bereich auf die Stirnseite des Implantates anbringbar und sein unterer Bereich ist in die Anschluss-Geometrie des Implantates einbringbar. Im unteren Bereich weist der Schaft beispielsweise einen zylindrischen, vorzugsweise Aussen-6-Kant- oder 8-Kantumfang auf, um in die entsprechende 8- oder 6-Kant-Innen-Geometrie eines Implantates aufgenommen werden zu können. Gleichfalls kann der Schaft erfindungsgemäß eine anders geartete Anschlussgeometrie aufweisen, wie z.B. eine zylindrische mit 3 auf 120° versetzten Nasen oder eine sternförmige Anschlussgeometrie.

Der längliche, hohle Schaft weist eine Seitenwand auf. Der Schaft des Scanabutments weist in seinem mittleren Bereich und unteren Bereich in der Seitenwand mindestens zwei bis nach terminal verlaufende Schlitze auf, insbesondere sind die Schlitze im wesentlichen axiale Schlitze Bevorzugt sind zwei, drei, vier, fünf, sechs, sieben oder acht axiale Schlitze. Bevorzugt münden die Schlitze an ihren oberen Enden jeweils in einer Ausnehmung, wie einer kreisförmigen Ausnehmung, in der Seitenwand und verlaufen in der Seitenwand bis nach terminal an die Unterseite des Schaftes. Ebenso Gegenstand der Erfindung ist ein Kit umfassend das Scanabutment sowie die an das Scanabutment angepasste Schraube oder den an das Scanabutment angepassten Bolzen.

CIM-Prozesse (Computer-Integrated Manufacturing), wie CAD/CAM-Verfahren, gewinnen in der dentalen Prothetik zunehmend an Bedeutung. So ist es bei der Implantatprothetik inzwischen üblich, die Implantat- und Restzahnsituation im Patientenmund zu digitalisieren und den Zahnersatz über CAD/CAM zu gestalten und anzufertigen. Zur Digitalisierung der Ausrichtung der Implantate über das Scannen eines Gipsmodells oder auch der Implantate im Patientenmund kommen sogenannte Scanabutments zum Einsatz.

Scanabutments sind in der Regel zylinderförmige Vorrichtungen aus einem Kunststoff, die mit geringem Passungsspiel fest mit den Implantaten verschraubt werden. Diese Vorrichtungen erlauben es über einen optischen Scan mit einem Tisch- oder Intraoralscanner die dreidimensionale Lage der Implantate im Kiefer zu bestimmen. Der Scan der Scanabutments dient daher dazu, die Lage der Implantate durch den Scan, einer parallel in der Höhe versetzen Ebene der Oberseite des Scanabutments und des Schaftes des Scanabutments, die Ebene der Stirnseite des Implantates sowie die Ausrichtung des Implantates möglichst genau zu vermessen. Dies funktioniert recht gut für Einzelimplantate, die mit einem Implantataufbau und einer Krone versorgt werden. Die Höhenbestimmung der Implantatstirnseiten von Scanabutments erfolgt indirekt über die Bestimmung der Höhe und Ausrichtung der oberen Stirnseite der Scanabutments.

Die Scanabutments des Standes der Technik weisen dazu einen länglichen Schaft einer definierten Höhe auf, um die Achsrichtung und x-y Position des Implantates im Kiefer bestimmen zu können. In der einfachsten Ausführung sind die Schäfte kreisförmig, aber auch andere Querschnitte sind üblich. Des Weiteren sind z.B. auch kegelförmige und/oder kugelförmige Geometrien bekannt (z.B. CADstar).

Bei sogenannten Brückenkonstruktionen, bei denen zwei und mehr Implantate als Stütze für eine prothetische Versorgung, wie eine Dentalbrücke oder einen Steg, verwendet werden, reicht bislang oft die Genauigkeit der Digitalisierung noch nicht aus.

Dies liegt zum einen an der eingeschränkten Genauigkeit des Scanners und zum anderen an den Toleranzen auf Seiten von Implantat und Scanabutment, deren Passungsgeometrie mit einem Spiel von mehreren 1/100tel mm ausgelegt werden müssen, um in jedem Fall ineinander zu passen. Auf dem Markt erhältliche Scanabutments haben den Nachteil der Verschraubung sowie der Ungenauigkeit durch das Passungsspiel zwischen Scanabutment und Implantat.

Aus US 5782918 ist ein Implantat-Abutment-System bekannt, das eine Kombination aus einem Implantatanker, einem Abutment mit einer Vielzahl von Verbindungsmerkmalen zur Verbindung mit dem Implantat und einem Verriegelungsstift zur Verriegelung des Abutments im Implantat verwendet. Der Implantatanker umfasst eine axiale Bohrung an einem oberen Ende mit inneren Oberflächenmerkmalen, die zu den äußeren Oberflächenmerkmalen des unteren Endes des Aufbaus passen. Das Zusammenwirken dieser Merkmale verhindert eine Rotation des Abutments, sobald dieses im Implantat positioniert ist, und bietet außerdem Indexierbarkeit für abgewinkelte Abutments. Solche Anti-Rotations-Merkmale werden durch passende Verzahnungen und Rillen erreicht, die auf den zusammenwirkenden Oberflächen zwischen der Außenfläche des Abutments und der Innenfläche der Implantatbohrung bearbeitet sind. Weiterhin ist auch ein Retentionsmerkmal zur Verriegelung des Abutments im Implantat vorgesehen, das aus einem elastischen, segmentierten Ende mit einer Retentionsfläche besteht, die so positioniert ist, dass sie zu einer kooperativ geformten Fläche in der Implantatbohrung passt. Beim vollständigen Einsetzen des Abutments in die Implantatbohrung schnappt das segmentierte Ende in die Implantatbohrung ein, wodurch die Retentionsflächen zusammenpassen. Das Abutment hat auch eine axiale Bohrung, die es ermöglicht, einen Sicherungsstift in die Abutmentbohrung einzuschrauben. Nach dem vollständigen Einsetzen in die Abutmentbohrung wird die radiale Bewegung der Segmente am Segmentende verhindert, wodurch das Abutment im Implantat verriegelt wird. Die Kombination von zusammenwirkenden Oberflächenmerkmalen an der Schnapp-Kupplung und dem Implantat verhindert jede Möglichkeit einer axialen, lateralen oder rotatorischen Bewegung der Schnapp-Kupplung relativ zum Implantat.

Zur Herstellung passgenauer prothetischer Versorgungen über mehrere Implantate muss die okklusale Ebene der Implantate sehr genau ermittelt werden, weil bei Brückenkonstruktionen die Implantate über die prothetische Versorgung miteinander in Verbindung stehen. Bei ungenauen Daten der okklusalen Ebene fehlt der angefertigten prothetischen Versorgung eine präzise Passung.

Generell gehören Scanabutments sowie deren Digitalisierung über einen optischen Scanner zum Stand der Technik, jedoch stößt dieses System bei der Genauigkeit immer wieder an seine Grenzen. Daher ist bislang für Implantatbrücken ein Nachscannen des Dentalmodells in der Produktion und Anpassen der Daten notwendig.

Daher müssen bislang bei der digitalisierten Herstellung der von Implantaten getragenen Dentalbrücken in der Produktion die Implantatpositionen anhand des Gipsmodells nachgescannt werden und die koronalen Auflageflächen (koronalen Ebenen der Implantate) trotz vorliegender 3D-Konstruktionsdaten neu bestimmt werden. Besonders aufwendig ist dieses Nachscannen, weil dazu das Gipsmodell zusammen mit den 3D-Konstruktiondaten vom Dentallabor zu einem Zentralfertiger eingesendet werden muss. Das Zentrallabor führt dann ein Nachscannen des Dentalmodells vor der Herstellung von Implantaten getragenen Brücken durch und passt die digitalen Daten an.

Aufgabe der Erfindung war es, eine Möglichkeit aufzufinden, wie das vorgenannte Spiel bei der Passungsgeometrie minimiert werden kann und insbesondere vollkommen eliminiert werden kann. Eine weitere Aufgabe bestand darin, eine bessere Möglichkeit für die Verbindung von Implantat und Scanabutment als eine Verschraubung aufzufinden. Diese Verbindung soll die gleiche oder eine bessere Genauigkeit der Anordnung der Scanabutments und des Implantates erlauben und bevorzugt schneller zu befestigen und zu lösen sein. Zudem sollte versucht werden, weitere scannbare planare Flächen zur Verbesserung der Datengenauigkeit bereitzustellen. Des Weiteren bestand die Aufgabe möglichst eine koaxiale Anordnung des Scanabutments auf dem Implantat zu erzielen. Weitere Aufgaben der vorliegenden Erfindung bestanden darin, die Toleranzen beim Scannen von Implantatsituationen zu minimieren und vorzugsweise zugleich die Datenbasis für die Konstruktionen auf dentalen Implantaten zu verbessern. Insbesondere bestand die Aufgabe Scanabutments zu entwickeln, die eine verbesserte Datengenauigkeit der mesialen, bukkalen, labialen, oralen und/oder okklusalen Ebenen der/des Scanabutments und damit der koronalen Stirnseite(n) und der Lage des/der Implantat(e)s ermöglichen.

Insbesondere wird angestrebt ein Scanabutment zu entwickeln, um einen volldigitalen Prozess also vorzugsweise ohne die Notwendigkeit der Herstellung und/oder Zusendung eines realen Kiefermodells, zu ermöglichen, in dem der Scan der realen Kiefersituation im Mund des Patienten ausreichend genaue Daten liefert, um direkt eine provisorische prothetische Versorgung und/oder eine dauerhafte prothetische Versorgung aus den so gewonnen digitalen Daten herstellen zu können. Die vorgenannten prothetischen Versorgungen sollen vorzugsweise neben Kronen auch die volldigitale Herstellung von Implantatbrücken und Implantatstegen auf mindestens zwei oder mehr Implantaten oder optional mit Spacern versehenen Implantaten ermöglichen. Erfindungsgemäß sollen unter Implantatbrücken oder -stegen prothetische Versorgungen über mehr als zwei Zähne, vorzugsweise bis zu 16 Zähnen verstanden werden.

Gelöst wird die Aufgabe mit einem Scanabutment gemäß Anspruch 1, wobei vorteilhafte Ausgestaltungen in den Unteransprüchen sowie in der Beschreibung detailliert dargestellt sind.

Die Aufgabe, dass die Toleranz in der Passungsgeometrie deutlich vermindert wird, konnte gelöst werden, indem das Scanabutment im Bereich der Passung zum Implantat gespreizt wird und so direkt mittig ausgerichtet wird und ohne Spiel die beiden Partner miteinander verbindet. Durch diese Maßnahme kann eine koaxiale Anordnung der Längsachse des Scanabutments und der Längsachse des Implantates erzielt werden. Durch das erfindungsgemäße Scanabutment kann die Fertigungstoleranz erheblich verbessert werden. Bislang konnte die Fertigungsgenauigkeit bis zu 0,06 mm betragen, da sich bislang verschiedene Toleranzen kumulativ auswirken, indem die Toleranz "Anschluss Scanabutment" sich zur Toleranz "Anschluss Implantat" addiert sowie auch zur Toleranz "Konzentrizität der Schaftaussenhülle Scanabutment", so dass die Gesamttolerenz sich wie folgt ergibt, d.h. z.B. T_{ges}= 0,02 + 0,02 + 0,02 = 0,06 mm. Mit den erfindungsgemäßen spreizbaren Scanabutments fallen die Toleranzen für den Fügespalt weg, so dass sich ein T_{ges}= 0 + 0 + 0,02 = 0,02 mm ergibt. Somit kann die Toleranz durch das erfindungsgemäße Scanabubment um nahezu 70 % bzw. um den Faktor drei verbessert werden.

Eine weitere Aufgabe konnte gelöst werden, indem das erfindungsgemäße Scanabutment an das Implantat geklemmt wird. Diese neue erfindungsgemäße Methode der Verbindung von Scanabutment und Implantat kann erstmals mit den erfindungsgemäßen spreizbaren Scanabutments erfolgen. Bislang wurden Scanabutments mit dem Implantat mit einer Schraube verschraubt. Das erfindungsgemäße Klemmen bedeutet für den Anwender im Dentallabor oder den Zahnarzt eine Vereinfachung der Handhabung der Scanabutments und führt zu einer deutlichen Zeitersparnis.

Mit den erfindungsgemäßen spreizbaren Scanabutments kann die Toleranz zwischen Scanabutment und Implantat dadurch vermindert werden, dass das Scanabutment mit einer quasi umlaufenden Linie einer oder mehrerer Kante(n) des äusseren Umfangs des Schaftes im gespreizten Zustand gegen die innere Oberfläche der Anschluss-geometrie des Implantates geklemmt oder verschraubt wird. Somit erlaubt das erfindungsgemäße spreizbare Scanabutment ein definiertes Aufeinandertreffen von Kontaktpunkten der Seitenwand des Scanabutments mit der inneren Oberfläche der Anschlussgeometrie des Implantates. Das erfindungsgemäße Scanabutment ist werkstoffeinstückig, d.h. ein integrales Scanabutment.

Bei einem Aufeinandertreffen von Flächen, wie es bei den Scanabutments des Standes der Technik üblich ist, kann nie ausgeschlossen werden, dass die Oberflächen eine gewisse Rauigkeit oder Welligkeit aufweisen, so dass keine definierten Kontaktpunkte vorliegen. Im schlimmsten Fall können derartige aufeinandertreffende Flächen sich gegeneinander verschieben, dies wird auch wandern genannt.

Die Erfindung gibt auch einen Lösungsvorschlag, wie die Toleranz der Höhenposition innerhalb der Scanabutments möglichst gering gehalten werden kann. Dazu wird der Abstand der planparallelen Ebenen der koronalen Stirnseite der Implantate und der zu scannenden Flächen(n) des Scanabutments deutlich vermindert.

Die Aufgaben wurden gelöst durch ein Scanabutment zur Bestimmung der Lage (x,y,z-Koordinaten) der Stirnseite eines dentalen enossalen Implantates, wobei das Abutment einen länglichen, hohlen Schaft aufweist, wobei der Schaft einen oberen Bereich, einen mittleren Bereich und einen unteren Bereich aufweist, und der Schaft im mittleren Bereich einen Sockel mit planarer Unterseite aufweist, an die sich der untere Bereich des Schaftes anschließt und der Schaft mit zumindest einem Teil seiner Unterseite des mittleren Bereiches auf die Stirnseite des Implantates anbringbar ist und der untere Bereich in die Anschlussgeometrie bzw. synonym Passungsgeometrie des Implantates einbringbar ist, wobei der längliche, hohle Schaft aus einer Seitenwand gebildet wird, und der Schaft in seinem mittleren Bereich und unterem Bereich in der Seitenwand spreizbar ist, und der Schaft in seinem mittleren Bereich und unteren Bereich in der Seitenwand mindestens zwei bis terminal verlaufende Schlitze aufweist, insbesondere axiale Schlitze. Weiter bevorzugt weist der Schaft drei, vier oder mehr Schlitze auf, wie 2, 3, 4, 5, 6, 7, 8. Ggf. kann der Schaft auch 9, 10, 11, 12, 13, 14, 15, oder mehr Schlitze aufweisen. Kern der Erfindung ist es, dass der Schaft in seinem unteren Bereich und mittleren Bereich nach terminal spreizbar ist

Grundsätzlich könnte das Scanabutment auch auf Spacern angebracht werden, wenn dies im Einzelfall sinnvoll erscheint. Die axialen Schlitze liegen somit vorzugsweise in einer Ebene die durch die Längsachse verläuft und sind zudem parallel zur Achse der Längsachse ausgerichtet. Bevorzugt kann der Schaft in seinem mittleren Bereich und unterem Bereich in der Seitenwand mindestens zwei bis terminal verlaufende a) axiale Schlitze aufweisen, insbesondere axiale und parallel zur Längsachse verlaufende Schlitze. Alternativ können b) die Schlitze statt axial auch gegenüber der Längsachse eine geneigte Ausrichtung aufweisen, insbesondere sind die Schlitze von 10° bis 30° aus der Ebene, in der die Längsachse liegt, geneigt.

Die Schlitze sind vorzugsweise parallel zur Längsachse des Schaftes des mittleren Bereiches angeordnet. Ferner ist der Schaft mit seinem mittleren Bereich vorzugsweise vollständig mit seiner Unterseite, wobei die Unterseite vorzugsweise eine planparallele Fläche ist, auf die Stirnseite des Implantates anbringbar.

Nach einer bevorzugten Ausführungsform wird ein Scanabutment mit einem zylinderförmigen Schaft im oberen und/oder mittleren und/oder unteren Bereich bereitgestellt, das mit geringem Spiel auf ein Implantat gefügt werden kann. Dieses Scanabutment kann mit einer Schraube auf einem Implantat verschraubt werden. Die Schraube ist am Schaftaußendurchmesser unterhalb des Schraubenkopfes konisch ausgeführt. Ein analoger konischer Bereich ist im Innenbereich des Scanabutments ausgebildet, insbesondere indem die innere Oberfläche der Seitenwand des mittleren und optional des unteren Bereiches konisch ausgeführt ist und sich der Konus nach terminal verjüngt. Im unteren Bereich ist das Scanabutment geschlitzt. Durch das Eindrehen der Schraube in den Konus des Scanabutments wird der geschlitzte Bereich des Scanabutments auseinander gedrückt und die äußere Passungsgeometrie des Scanabutments fügt sich an die innere Passungsgeometrie des Implantates.

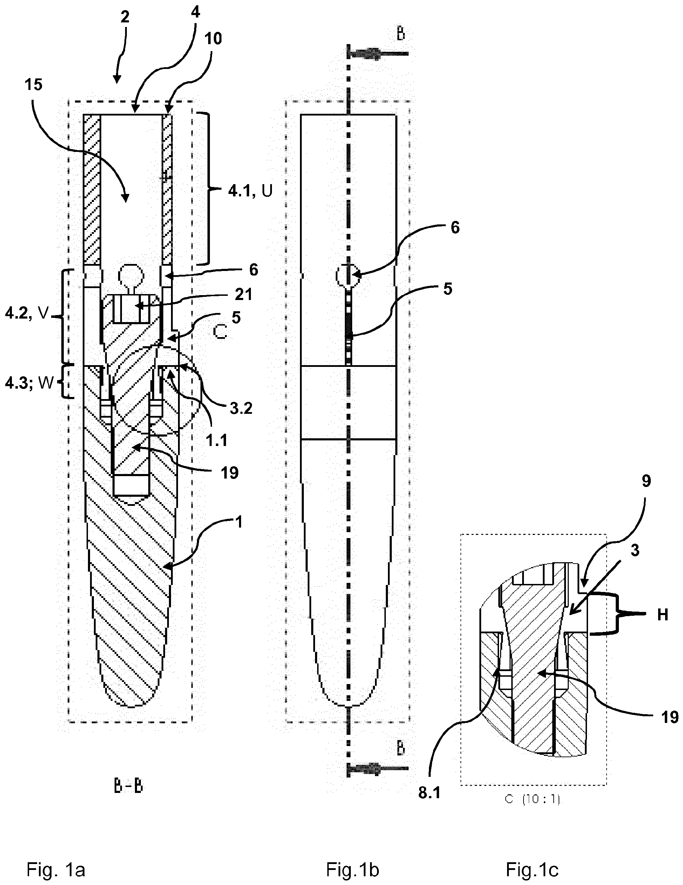

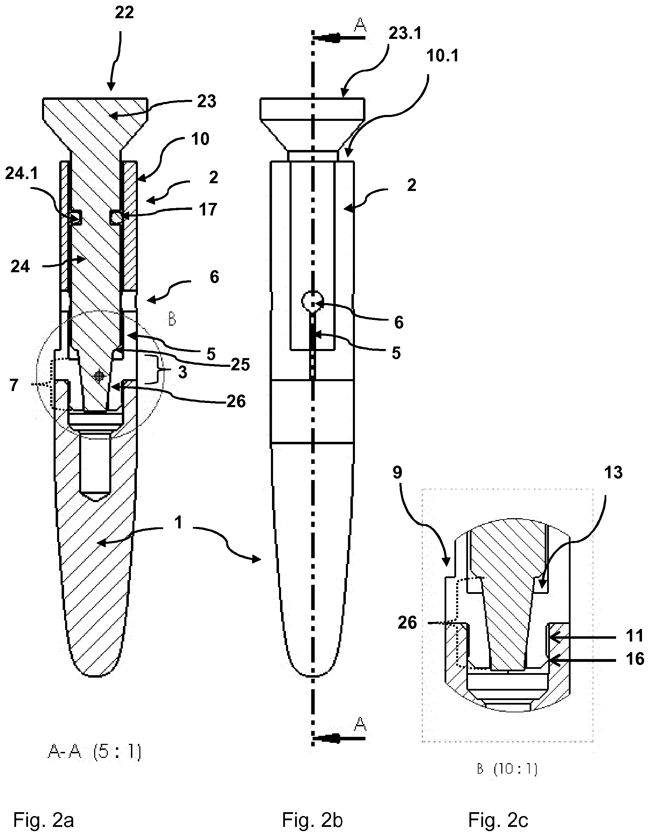

Nach einer zweiten besonders bevorzugten Ausführungsform wird der konische Bereich des vorgenannten Scanabutments anstatt mit einer Schraube durch einen eingeschobenen Bolzen auseinandergedrückt. In diesem Fall erfolgt ein konzertiertes Auseinanderdrücken der Passungsgeometrie unter gleichzeitigem Verklemmen und Halten des Scanabutments in der Passungsgeometrie des Implantates. Vorzugsweise ist die äußere Seitenwand des Schaftes im unteren Bereich, als Passungsgeometrie ausbildet, vorzugsweise nach außen und terminal spitz zulaufend, wie in Figur 1c dargestellt, und optional mit einem Hinterschnitt zum äußeren mittleren Bereich oder mit einer nach außen weisenden Nase (16), insbesondere einer kantigen (Halte)Nase (16), wie in Figur 2c dargestellt, versehen.

Die Ausführung der Passungsgeometrie des Scanabutments, insbesondere der untere Bereich des Schaftes beider vorgenannten Ausführungsformen, kann zylindrisch, also geradwandig, sein oder sich nach terminal verjüngen, also spitz zulaufen, wie in Figur 1c in Ausschnitt C dargestellt oder mit einer mindestens einmal bis mehrfach unterbrochenen Kante wie in Figur 2c in Ausschnitt B dargestellt, versehen sein. Die Kante kann der äußeren Nase entsprechen.

Als ein dentales enossales Implantat wird vorliegend vorzugsweise ein im Kiefer eines Patienten befindliches Implantat oder ein Laboranalog des Implantates im realen oder virtuellen Modell des Kiefers verstanden.

Gegenstand der Erfindung ist somit ein Scanabutment zur Bestimmung der Lage (x,y,z-Koordinaten) der Stirnseite eines dentalen enossalen Implantates, wobei das Abutment einen länglichen, hohlen Schaft aufweist, wobei der Schaft einen oberen Bereich, einen mittleren Bereich und einen unteren Bereich aufweist, und der Schaft mit seinem mittleren Bereich mit Sockel mit planarer Unterseite, an die sich der untere Bereich des Schaftes anschließt und der Schaft mit zumindest einem Teil seiner Unterseite des mittleren Bereiches auf die Stirnseite des Implantates anbringbar ist und der untere Bereich in die Anschlussgeometrie des Implantates einbringbar ist, und der längliche, hohle Schaft aus einer Seitenwand gebildet ist, wobei der Schaft in seinem mittleren Bereich und unterem Bereich in der Seitenwand mindestens zwei bis terminal verlaufende axiale Schlitze aufweist.

Nach einer weiteren bevorzugten Ausführungsform enden die Schlitze an ihrem oberen Ende nach koronal jeweils in einer Ausnehmung in der Seitenwand und verlaufen in der Seitenwand bis terminal an die Unterseite des Schaftes, d.h. bis zur Unterseite der Seitenwand nach apikal. Die Ausnehmungen sind vorzugsweise hohle Ausnehmungen, insbesondere weisen die Ausnehmungen einen gebogenen Rand auf, wie einen elliptischen, ovalen, zylindrischen Rand, vorzugsweise sind die Ausnehmungen kreisförmige. Die Ausnehmungen sind vorzugsweise im mittleren Bereich des Schaftes angeordnet, bevorzugt in einem Bereich zum oberen Bereich des Schaftes.

Die Ausnehmung im mittleren Bereich des Schaftes ist oberhalb des Sockels angeordnet. Der Sockel liegt später in der Einbausituation mit seiner Unterseite auf der Stirnseite eines Implantates auf. Die Position der Ausnehmung im mittleren Teil des Scanabutments dient dazu die Kraft, die zur Fixierung des Scanabutments mittels eines in das Scanabutment einschiebbaren Bolzens oder einer Schraube, zu verringern. Durch den eingeschobenen Bolzen oder die im Scanabutment eingedrehte Schraube wird der Schaft im unteren Bereich und optional im mittleren Bereich geweitet und richtet das Scanabutment konzentrisch oder koaxial in der Aufnahmegeometrie des Implantates aus. Der besondere Vorteil des erfindungsgemäßen Scanabutments besteht darin, dass durch die besondere Lage der Schlitze im mittleren und unteren Bereich des Schaftes eine Befestigung und konzentrische bzw. axiale Ausrichtung des Scanabuments in Anschlußgeometrien mit glatten inneren Oberflächen von Implantaten möglich ist. Vorteilhaft ist für die Ausrichtung auch die Geometrie der erfindungsgemäßen Schlitze, die vorzugsweise eine geringe Breite aufweisen.

Die Schlitze der erfindungsgemäßen Scanabutments dienen lediglich dazu die Toleranz in der Implantatanschlussgeometrie auszugleichen, so dass der untere Bereich des Schaftes in der Anschlussgeometrie der Implantate anliegt. Dadurch, dass die Schlitze im mittleren Bereich angeordnet sind, ist die mögliche Auslenkung der gebildeten Schenkel grösser. Die Schlitze im unteren Bereich des Schaftes weisen vorzugsweise eine Breite von etwa 0,1 bis 0,4 mm auf, vorzugsweise 0,1 bis 0,3 mm, besonders bevorzugt um 0,2 mm mit einer geringen Toleranz von +/- 0,025 mm. Der Vorteil der erfindungsgemäßen Schlitze im mittleren und unteren Bereich erlaubt auch einen Erhalt der Schaftgeometrie, dies erhöht die Scangenauigkeit.

Die Schlitze und Ausnehmung sowie Nasen im unteren Bereich unterhalb des Sockels gemäss dem Stand der Technik dienen einem Verklemmen in der Anschlussgeometrie der Implantate, indem die Schlitze zusammengedrückt werden und die Nasen unter Spannung in der Anschlussgeometrie des Implantates einrasten, indem sich die Schenkel wieder in ihre ursprüngliche Position aufweiten.

Die erfindungsgemäßen Schlitze sind vorzugsweise so ausgebildet, dass sie nur aufgeweitet werden können, d.h. die Schenkel können im unteren Bereich nur auseinandergedrückt werden. Der Winkel der Schlitze kann daher von etwa 0° mit Anfangspunkt in der Ausnehmung nur vergrößert werden in einen Bereich von 1 Winkelminute (1') bis 20°, vorzugsweise von 1' bis 10°, 5' bis 5°. Der oder die Schlitze weisen vorzugsweise lediglich eine Breite von 0,1 bis 0,2 mm auf.

Des Weiteren ist es besonders bevorzugt, wenn das Verhältnis der Höhen des unteren (W) und mittleren (V) Bereiches des Schaftes von 1 : 1 bis 1 : 4 beträgt, bevorzugt von 1 : 2 bis 1 : 4, besonders bevorzugt 1 : 2 bis 1 : 3.

Bevorzugt kann das Verhältnis der Höhen des mittleren (V) und oberen Bereiches (U) des Schaftes von 1 : 1 bis 1 : 4 betragen, bevorzugt von 1 : 1,5 bis 1 : 3.

Ferner ist es bevorzugt, wenn der Schaft eines Scanabutments a) mindestens zwei axiale Schlitze aufweist, die in einer ersten axialen Ebene (B) oder einer zweiten axialen Ebene (A) des Schaftes liegen, oder b) der Schaft mindestens vier axiale Schlitze aufweist, die in der ersten axialen Ebene (B) und der zweiten axialen Ebene (A) des Schaftes liegen. Nach weiteren bevorzugten Alternativen kann der Schaft 2 bis 20 Schlitze aufweisen, wobei vorzugsweise jeder Schlitz in einer axialen Ebene des Schaftes liegt. Die Verteilung der Schlitze auf dem Umfang des Schaftes kann beliebig gewählt werden. Nach einer bevorzugten Ausführungsform sind die Schlitze vorzugsweise in einem Winkel von etwa 90° beabstandet in der Seitenwand des Schaftes.

Entsprechend einer weiteren bevorzugten Ausgestaltung der Erfindung weist die Seitenwand des unteren Bereiches des Schaftes mindestens einen äußeren Durchmesser auf, der kleiner ist als der Durchmesser der Seitenwand des mittleren und optional des oberen Bereiches des Scanabutments, wobei die Seitenwand des unteren Bereiches in ihrem äußeren Umfang in Richtung auf den mittleren Bereich der Seitenwand, vorzugsweise unterhalb des Sockels, mindestens einen Hinterschnitt aufweist. Durch diesen Hinterschnitt wird vorzugsweise eine äussere Kante am äußeren Umfang der Seitenwand ausgebildet. Erfindungsgemäß ist es besonders bevorzugt, wenn die Seitenwand des unteren Bereiches subterminal bis terminal an ihrem äußeren Umfang mindestens eine nach außen weisende Kante an der Seitenwand aufweist. Vorzugsweise eine umlaufende Kante, die nur durch die Schlitze unterbrochen ist.

Wenn die Seitenwand des unteren Bereiches, insbesondere eines zylindrischen Bereiches, des Schaftes einen äußeren Durchmesser aufweist, der kleiner ist als der Durchmesser der Seitenwand des mittleren und optional des oberen Bereiches des Scanabutments, insbesondere zylindrischer Bereiche, kann ein umlaufender Absatz an der Unterseite des mittleren Bereiches oder der Sockel im mittleren Bereich ausgebildet werden.

Die mindestens eine nach außen weisende Kante kann als Falz, nutförmig mit zwei äusseren Kanten oder vorzugsweise mit einem spitzen Innenwinkel von kleiner 90°, vorzugsweise von kleiner gleich 85°, 80°, 75°, 70°, 65°, 60° oder auch als umlaufende nahezu senkrecht auf dem äußeren Umfang der Seiten verlaufende Wand oder in Form einer spitzwinkligen Kante ausgebildet sein. Die erfindungsgemäße Kante ist mindestens zwei bis mehrfach, insbesondere durch die Schlitze, unterbrochen. Somit kann die Kante mindestens eine Anzahl an Durchbrechungen aufweisen, die der Anzahl der Schlitze entspricht. Alternativ kann die Kante auch mehr Durchbrechungen aufweisen, um die Kontaktpunkte mit der Passungsgeometrie des Implantates genauer zu definieren.

Wobei durch den Hinterschnitt, die Kante oder die Nase erfindungsgemäß definierte Kontaktpunkte bis zu definierten Kontaktlinien ausgebildet werden, die mit der inneren Oberfläche der Anschlussgeometrie bzw. Passungsgeometrie des Implantates geklemmt werden.

Nach einer weiteren Ausführungsform des Scanabutments ist die innere Oberfläche der Seitenwand des mittleren Bereiches und optional des unteren Bereiches des Schaftes konisch ausgeführt, wobei sich der Konus in terminaler Richtung zur Unterseite des Scanabutments bzw. des Schaftes verjüngt. Nach einer weiteren Alternative vermindert sich der innere Durchmesser der inneren Oberfläche der Seitenwand des mittleren Bereiches und optional des unteren Bereiches des Schaftes nach terminal. Nach einer Alternative vermindert sich der Durchmesser des mittleren Bereiches während beim sich anschließenden unteren Bereich der Durchmesser dem kleinsten Durchmesser des mittleren Bereiches entspricht oder sich der Durchmesser nach terminal aufweitet. Im unteren Bereich kann zumindest Bereichsweise ein Innengewinde vorgesehen sein.

Ferner ist Gegenstand der Erfindung ein Scanabutment bei dem die innere Oberfläche der Seitenwand des mittleren Bereiches und optional des unteren Bereiches konisch ausgeführt ist und sich der Konus in terminaler Richtung zur Unterseite Scanabutments verjüngt, wobei sich eine innere Aufweitung der inneren Oberfläche oder eine kreiszylindrische innere Oberfläche im unteren Bereich im Anschluss an den sich konischen verjüngenden Bereich anschließt.

Entsprechend einer weiteren besonders bevorzugten Ausführungsform des Scanabutments ist im oberen Bereich des Schaftes ein O-Ring angeordnet. Der O-Ring verläuft vorzugsweise horizontal im inneren Umfang der Seitenwand, insbesondere teilweise in einer innen auf dem inneren Umfang der Seitenwand umlaufenden Nut, und dient dazu einen Bolzen mit einer entsprechenden Nut zu halten mit dem das Scanabutment auf einem Implantat oder Spacer eines Implantates festgeklemmt werden kann.

Entsprechend einer weiteren bevorzugten Alternative weist die Seitenwand des unteren Bereiches des Schaftes des Scanabutments mindestens einen äußeren Durchmesser auf, der kleiner ist als der Durchmesser der Seitenwand des mittleren und optional des oberen Bereiches, und wobei die Seitenwand des unteren Bereiches subterminal bis terminal an ihrem äußeren Umfang eine nach außen weisende Nase an der Seitenwand aufweist. Vorzugsweise ist die Nase umlaufend vorgesehen und ist insbesondere nur durch die Schlitze unterbrochen. Die Referenz auf den Durchmesser des mittleren oder oberen Bereiches bezieht sich vorzugsweise auf einen gemittelten Durchmesser dieser Bereiche, wenn diese Bereiche vertikale Nuten, Wellen, Hinterschnitte oder ähnliches aufweisen sollten. In einer Ausführungsform ist der untere Bereich in Richtung auf den mittleren Bereich mit einem Hinterschnitt, insbesondere einem einzigen Hinterschnitt direkt unterhalb der Unterseite des Sockels, versehen und subterminal bis terminal mit einer vorzugsweise umlaufenden Nase versehen, die nur durch die Schlitze unterbrochen ist. In einer weiteren Ausführungsform ist der untere Bereich zylindrisch, insbesondere kreiszylindrisch, und subterminal bis terminal mit einer vorzugsweise umlaufenden Nase versehen, die nur durch die Schlitze unterbrochen ist.

Dabei ist es nach einer weiteren Alternative bevorzugt, wenn die Seitenwand des unteren Bereiches des Schaftes eine zylindrische, zylindrische mit Nuten versehene oder eine andere geeignete Geometrie aufweist. Bevorzugt ist der untere Bereich des Schaftes kreiszylindrisch und weist einen äusseren Durchmesser auf, der kleiner ist als der Durchmesser der Seitenwand des mittleren und optional des oberen Bereiches. Der kleinere Durchmesser dient insbesondere dazu die im unteren Bereich, vorzugsweise subterminal bis terminal, vorgesehene Nase mit einer definierten gewissen Höhe vertikal zur Seitenwand versehen zu können. Die vertikale Höhe der Nase beträgt vorzugsweise mindestens von 0,01 mm bis 2 mm, vorzugsweise 0,05 mm bis 1 mm.

Bei Scanabutments des Standes der Technik erfolgt die vorgenannte Bestimmung der Höhenlage der Implantatstirnseite(n) ausschließlich durch einen Scan der oberen Stirnseite der Abutments. Die koronale Stirnseite der Scanabutments ist in der Regel jedoch etwa 10 mm und mehr von der Stirnseite der Implantate entfernt, so dass dadurch die Fertigungstoleranzen dieser Geometrie für bekannte Scanabutments sehr hoch sind. Die erfindungsgemäßen Scanabutments können eine oder mehrere Flächen aufweisen, die nicht auf der koronalen Stirnfläche des Scanabutments synonym zur Oberseite des Schaftes des Scanabutments in einem Abstand von etwa 10 bis 15 mm zur koronalen Stirnseite des Implantates liegen, sondern bevorzugt in einem Abstand von noch 1 bis 3 mm. Dadurch können die Toleranzen um ca. 50% vermindert werden. So gibt die DIN ISO 2768-1 Allgemeintoleranzen - fein von 2 +/-0,05 mm bis zu 10 +/-0,1mm an. Die ISO 286 nennt ein Toleranzsystem für Längenmaße von Kunststoffdrehteilen der Kategorie A gemäß Toleranzreihe 9 und Massen von 1 bis 3 mm von 0,025 mm und für Masse von 10 bis 18 mm von 0,043 mm. Die zusätzlichen planaren Flächen liegen insbesondere in der planaren Ebene der Oberseite der Sockel.

Aufgrund der geringen Durchmesser von Implantaten, die in der Regel zwischen 3,3 und 6,0 mm betragen, wird jedoch der gesamte zur Verfügung stehende Durchmesser für den Schaft des Scanabutments benötigt. Folglich fiel bei bekannten Systemen automatisch die gesamte Fläche für die Höhenbestimmung auf die obere Stirnseite des Scanabutments, synonym Oberseite des Schaftes. Die obere Stirnseite des Abutments ist jedoch am weitesten von der Stirnseite des Implantates entfernt. Um nun eine parallele Fläche zur Stirnseite des Implantates mit kleinstmöglichen Abstand, z.B.

2 mm, zu bekommen, wird erfindungsgemäß vorgeschlagen den Schaft, vorzugsweise in einer Alternative auf 90° seines Umfanges zu unterbrechen. Diese Durchbrechung des Schaftes kann grösser oder kleiner als 90° ausgebildet sein, insbesondere in Form eines Bogensegmentes. Sofern eine Durchbrechung mit einem Öffnungswinkel von kleiner < 90° gewählt wird, weist die gebildete Fläche keine optimale Größe auf und es kann vorkommen, dass die Fläche nicht mit der gewünschten Genauigkeit erfasst werden kann. Wird ein Öffnungswinkel der Durchbrechung von grösser > 120° gewählt, sinkt die Scangenauigkeit des Schaftes. Eine Balance und Steigerung der Scangenauigkeit der parallelen Fläche die durch die Durchbrechung gebildet wird und der Oberseite des Schaftes des Scanabutments wird bei einem Öffnungswinkel von etwa 90° bis kleiner gleich 120° erzielt.

Bei Scanabutments für größere Implantatdurchmesser ab etwa 4,5 mm kann zudem eine Abstufung des unteren Bereiches des Schaftes zum Sockel erfolgen, wodurch eine weitere Fläche, insbesondere eine umlaufende, weitere Fläche entsteht. Diese Fläche dient der Vergrösserung der planparallelen Gesamtfläche(Flächen 6+7), die wiederum vorzugsweise planparallel zur koronalen Implantatstirnseite ist, die noch besser und genauer vom Scanner erfasst werden kann. In allen erfindungsgemäßen Ausführungsformen wird vorzugsweise im Scanvorgang zusätzlich die verbleibende Oberseite des Schaftes eingescannt, die vorzugsweise ebenfalls parallel zu den erfindungsgemäßen Flächen des Scanabutments ist.

Die Höhe (H) des Sockels liegt erfindungsgemäß vorzugsweise bei grösser gleich 0,1 bis 10 mm, insbesondere von 0,75 mm bis 5 mm, bevorzugt von um 1 bis 3 mm, insbesondere mit einer Toleranz von plus/minus 0,1 mm, vorzugsweise bis plus/minus 0,05 mm.

Ebenfalls Gegenstand der Erfindung ist ein Scanabutment mit einem Schaft, der im mittleren Bereich einen Sockel aufweist, an den sich der untere Bereich des Schaftes anschließt, wobei der Sockel vorzugsweise eine planare Fläche aufweist. Besonders bevorzugt weist der Sockel eine horizontale, planare Fläche, vorzugsweise umlaufende Fläche, am äußeren Umfang des Schaftes auf. Eine nicht umlaufende Fläche, insbesondere in Form eines Bogensegmentes, kann gebildet werden durch eine Durchbrechung des Schaftes im oberen Bereich. Erfindungsgemäß bevorzugt ist der Durchmesser des Schaftes im Bereich des Sockels (mittlerer Bereich) grösser als der Durchmesser des Schaftes im oberen Bereich und bildet eine um den Schaft des oberen Bereiches umlaufende planare Fläche aus. Diese Fläche ist vorzugsweise parallel zur Ebene der Unterseite des Sockels und/oder der Ebene der Oberseite des Schaftes angeordnet. Besonders bevorzugt kann das Scanabutment sowohl eine planare Fläche in Form eines Bogensegmentes und eine umlaufende planare Fläche, insbesondere auf dem Sockel, aufweisen.

Der längliche Schaft kann vorzugsweise eine zylindrische äußere Seitenwand aufweisen oder alternativ auch polyedrisch, zylindrisch, stern- oder wellenförmig, kegelförmig und/oder kugelförmig, oder auch rotationssymmetrisch entlang der Hauptachse ausgebildet sein, wie bspw. ein Kreiszylinder oder auch ein Rotationsellipsoid. Ferner kann die vorgenannte Seitenwand des Schaftes mindestens eine planare Fläche an der äußeren Seitenwand aufweisen, wie bspw. eines beliebigen Kegelschnitts des Schaftes oder Kugelschnitts des Schaftes.

Bei besonders bevorzugten Scanabutments kann die äußere Seitenwand des Schaftes die Form eines Zylinders, insbesondere eines geraden Prismas, aufweisen, vorzugsweise mit der Grundfläche eines Vier- oder Fünfecks mit einer Kantenlänge der Grundfläche von 3,5 mm bis 6,5 mm, besonders bevorzugt mit nahezu rechteckigem Querschnitt. Dabei ist es besonders bevorzugt, wenn das gerade Prisma, insbesondere ein Prisma mit rechteckigem Querschnitt, bevorzugt mit quadratischem Querschnitt, abgerundete vertikale Kanten in der Höhe des Prismas aufweist. Der Radius der Kanten beträgt vorzugsweise von 0,1 bis 1 mm.

Nach einer weiteren Ausführungsform der Erfindung wird eine dentale Schraube, zur Befestigung eines erfindungsgemäßen Scanabutments auf einem dentalen Implantat offenbart, das ggf. mit einem Spacer versehen sein kann, wobei die Schraube einen Schraubenkopf aufweist, insbesondere mit einer polygonalen Innenkant- oder Torx-Geometrie, vorzugsweise einer Innen-6-Kant- oder Innen-8-Kant-Geometrie, wobei unterhalb des Schraubenkopfes ein Schaft angeordnet ist, wobei der Schaft zumindest in einem Bereich ein Außengewinde aufweist, wobei sich der Schaft der Schraube an seinem äußeren Umfang zumindest teilweise in Richtung auf das untere Ende der Schraube konisch verjüngt.

Vorzugsweise weist der Schaft unterhalb des sich konisch zum unteren Ende der Schraube verjüngenden äußeren Umfangs einen zylindrischen äußeren Umfang des Schaftes mit Außengewinde auf. Die Schraube weist einen konischen äußern Umfang des Schaftes und einen zylindrischen äußeren Umfang des Schaftes auf, der unterhalb des konischen Bereiches, zumindest teilweise ein Außengewinde aufweist. Vorzugsweise ist das Außengewinde terminal, vorzugsweise subterminal am Schaft angeordnet. Besonders bevorzugt weist die Schraube oberhalb oder unterhalb des sich verjüngenden Bereiches ein zusätzliches Außengewinde auf, um das Scanabutment auf einem Implantat befestigen zu können.

Entsprechend einer alternativen bevorzugten Ausführungsform wird ein dentaler Bolzen zur Befestigung eines Scanabutments auf einem dentalen Implantat oder einem Spacer offenbart, wobei der Bolzen einen Bolzenkopf und unterhalb des Bolzenkopfes einen Schaft aufweist, wobei im Bereich des äußeren Umfangs des Schaftes des Bolzens eine Nut angeordnet ist. Die Nut ist insbesondere in einem Bereich unterhalb des Bolzenkopfes und vorzugsweise oberhalb des Absatzes angeordnet, vorzugsweise ist die Nut eine umlaufende Nut. Ferner weist der Bolzen im unteren Bereich des Schaftes einen Absatz auf, im Anschluss an den Absatz verjüngt sich der Schaft weiter, und zwar erfindungsgemäß verjüngt sich der Schaft unterhalb des Absatzes zumindest teilweise konisch nach terminal. Der Absatz ist dazu ausgebildet als Auflagefläche für den Schrauben- oder Bolzenkopf am inneren Umfang der Seitenwand im mittleren Bereich des Schaftes zu dienen.

Die Nut des Bolzens, insbesondere eine umlaufende Nut, ist erfindungsgemäß ausgebildet um den O-Ring, insbesondere einen horizontal angeordneten O-Ring, der im oberen Bereich des Schaftes des Scanabutments angeordnet ist, aufnehmen zu können und in dieser Anordnung eine feste und sehr positionstreue Klemmverbindung des Scanabutments auf einem Implantat oder Spacer zu gewährleisten. Bevorzugt kann mit dem erfindungsgemäßen Scanabutment und der erfindungsgemäßen Schraube oder dem Bolzen eine koaxiale Ausrichtung der Längsachse des Scanabutments mit der Längsachse des Implantates gewährleistet werden. Die erfindungsgemäße dentale Schraube oder der dentale Bolzen zeichnen sich gegenüber üblichen Befestigungsmitteln durch eine sehr hohe Genauigkeit und besonders geringe Toleranz aus. Die Schraube und der Bolzen müssen sehr genau an die inneren Durchmesser der Scanabutments angepasst sein, um die vorhandene umlaufende Lücke, die durch den Hinterschnitt am äußeren Umfang des Schaftes gebildet wird, insbesondere weist der Hinterschnitt einer Tiefe von ca. 0,01 bis 0,5 mm, insbesondere von 0,01 bis 0,3 mm, besonders bevorzugt von 0,05 bis 0,2 mm auf, zwischen dem Scanabutment und dem Implantat beim Spreizen zu eliminieren. Als Materialien für die Schraube oder den Bolzen kommen die nachfolgend genannten Materialien in Betracht aus denen das Scanabutment gefertigt sein kann.

Gleichfalls wird ein Kit umfassend mindestens ein erfindungsgemäßes Scanabutment und mindestens eine erfindungsgemäße dentale Schraube oder einen erfindungsgemäßen dentalen Bolzen offenbart.

Ebenso offenbart ist die Verwendung einer erfindungsgemässen Schraube oder eines Bolzens zum Festlegen, insbesondere Verschrauben oder Klemmen, eines Scanabutments auf einem dentalen Implantat oder auf einem Spacer eines dentalen Implantates. Ebenso offenbart ist die Verwendung einer erfindungsgemäßen Schraube oder eines erfindungsgemäßen Bolzens zur koaxialen Ausrichtung und Befestigung des Scanabutments auf dem Implantat.

Ferner offenbart ist die Verwendung der Oberseite der Seitenwand des Scanabutments zur Z-Lagebestimmung sowie weiterer planarer vorzugsweise senkrecht zur Längsmittelachse oder parallel zur Längsmittelachse des Scanabutments liegenden planaren und optional parallel zur Längsachse liegenden Flächen zur Bestimmung der Lage und Orientierung der Stirnseite sowie der Längsachse des Implantates.

Unter den erfindungsgemäßen jeweiligen Ebenen werden jene geometrischen Ebenen verstanden, die sich bspw. in die jeweiligen Oberflächen, Stirnseiten, Oberseiten oder Unterseiten legen lassen, wie insbesondere die Ebene zwischen Schaft und Sockel, so wie sich jeweils eine Ebene in der Oberfläche des Schaftes oder zwischen der Unterseite des Schaftes und der Oberseite des Sockels oder in die Stirnseite des Implantates legen lässt.

Der längliche, hohle Schaft wird gebildet durch die Seitenwand, die die äußere Begrenzung des Schaftes bildet, wobei der hohle Schaft ein innen, entlang der Längsachse verlaufendes Lumen aufweist. Die Seitenwand ist insbesondere zylindrisch, und kann erfindungsgemäß durchbrochen sein und/oder einen geringeren Durchmesser als der Sockel aufweisen.

Bevorzugt ist die Oberfläche des Scanabutments im Wesentlichen glatt, wobei Oberflächen mit einem Rₐ-Wert von Rₐ (Rauhigkeitswert) glatt kleiner gleich 1,6 µm als glatt gelten. Ebenso kann der Rₐ-Wert auch kleiner gleich 12,5 µm betragen. Werte oberhalb von 12,5 µm sind weniger bevorzugt, denn je grösser der Wert des Rₐ-Wertes ist, desto weniger ist die Oberfläche für einen detailgenauen Scan geeignet. So sind Werte von grösser 12,5 bis 50 µm für eine hohe Genauigkeit nicht gut geeignet. Besonders bevorzugt ist, dass die Oberflächen des Scanabutments zumindest teilweise mit einer glatten Oberflächenstruktur versehen sind, vorzugsweise kann eine Fläche der Seitenwand und optional die Oberseite des Schaftes mit einer glatten Oberflächenstruktur versehen sein, wie vorzugsweise Rₐ = kleiner gleich 1,6 µm. Dazu können die Oberflächen oder zumindest die einzuscannenden Oberflächen Laserpoliert oder mit einer anderen dem Fachmann bekannten Methode poliert worden sein.

Das Material der erfindungsgemäßen Scanabutments, Schrauben und/oder Bolzen kann ausgewählt sein aus einem polymeren Material, gefülltem polymeren Material, Metall, einer Legierung, wie Titan, Kobaltchrom, Gold, einem Faserverstärktem Polymer, Hybridmaterial, wobei das polymere Material ausgewählt sein kann aus Fluorpolymeren, Polysulfid enthaltenden Polymeren, Polysulfon enthaltenden Polymeren, Polyaryletherketonen, Polyimiden, PC (Polycarbonat), PAEK (Polyaryletherketonen), PEEK (Polyetheretherketonen), PEK (Polyether-ketonen); PEKK (Poly(etherketonketonen)), PEEEK (Poly(etheretheretherketonen)), PEEKK (Poly(etheretherketonketonen)), PEKEKK (Poly(etherketonetherketon-ketonen); PES (Polyarylsulfonen), PPSU (Polyarylsulfonen), PSU (Polysulfonen), PPS (Polyphenylensulfiden), PFA (Perfluoralkoxy-Polymeren), PFE (Poly(fluorenylen ethynylen)polymeren); PVDF (Polyvinylidenfluoriden), PCTFE (Polytetrafluoroethylen), PAI (Polyamideimiden); PI (Polyimiden), PEI (Polyetherimiden), PBI (Polybenzimidazolen). Bevorzugt können als metallische Legierungen oder Metalle Kobaltchrom, Titan, Gold etc. verwendet werden.

Die in den nachfolgenden Figuren dargestellten Ausführungsformen stellen beispielhafte erfindungsgemäße Gegenstände dar, ohne die Erfindung auf diese Gegenstände zu beschränken.

Die erfindungsgemäßen Merkmale sind grundsätzlich auf alle dem Fachmann geläufigen oder denkbaren Schaftgeometrien übertragbar. Ebenso können die Scanabutments aus allen dem Fachmann geläufigen Materialien hergestellt sein.

Die Figuren stellen dar:
**Fig. 1a****:** Longitudinaler Querschnitt Ebene B **Fig.1b****:** Ansicht quer zu Ebene B
**Fig. 1c****:** Ausschnitt C der Figur 1a eines Scanabutments **2** mit Schraube **19**
**Fig. 2a****:** Longitudinaler Querschnitt Ebene B mit Implantat **Fig. 2e** wie **Fig. 2a** ohne Implantat,
**Fig.2b****:** Ansicht quer zu Ebene B mit Implantat **Fig. 2f** wie **Fig.** 2b ohne Implantat
**Fig. 2c****:** Ausschnitt C der Figur 2a eines Scanabutments **2** mit Bolzen **22** mit Implantat,
**Fig. 2d** wie **Fig. 2c** ohne Implantat, **Fig. 2g** und **2h** : Scanabument mit Darstellung der planaren Seitenwand **18** und Nase **16** terminal am äußeren Umfang der Seitenwand,
**Fig. 3****:** Größere Darstellung des Ausschnittes der **Figur 1c**
**Fig. 4****:** Größere Darstellung des Ausschnittes der **Figur 2c**
**Fig. 5a, 5b** und **5c****:** Erfindungsgemäße Schraube **19**
**Fig. 6a, 6a** und **6c****:** Erfindungsgemäßer Bolzen **22**

**Figur 1a** stellt dar ein Scanabutment **2** mit einem Schaft **4** und einer Seitenwand **10,** wobei der Schaft **4** einen oberen Bereich **4.1,** einen mittleren Bereich **4.2** und einen unteren Bereich **4.3** aufweist. Der mittlere Bereich **4.2** umfasst einen Sockel **3 (****Fig. 1c****)** mit einer planaren Fläche **9.** Die Fläche **9** kann umlaufend ausgebildet sein und/oder als Bogensegment in einer Durchbrechung der Seitenwand. Der Sockel weist eine Höhe **H** auf. Ferner sind im mittleren Bereich **4.2** Schlitze **5** in der Seitenwand **10** des Schaftes bis terminal in den unteren Bereich **4.3** vorgesehen, um ein Spreizen des Schaftes **4** und darüber einer Ausrichtung und ein Verklemmen in einer Anschlussgeometrie eines Implantates zu ermöglichen. Das passgenaue Verklemmen erfolgt mittels eines definierten Kontaktes der umlaufenden Kante **8.1,** die durch die Schlitze **5** unterbrochen ist, und, wobei die Kante durch die Spreizung an die innere Oberfläche der Anschlussgeometrie des Implantates gepresst wird. Aufgrund der erfindungsgemäßen Spreizung in Kombination mit der Kante **8.1** oder Nase **16** erfolgt eine Ausrichtung und sehr passgenaue Fixierung des Scanabutments auf dem Implantat. Die äußere Kante **8.1** kann einen Innenwinkel alpha **(α)** kleiner 90° aufweisen.

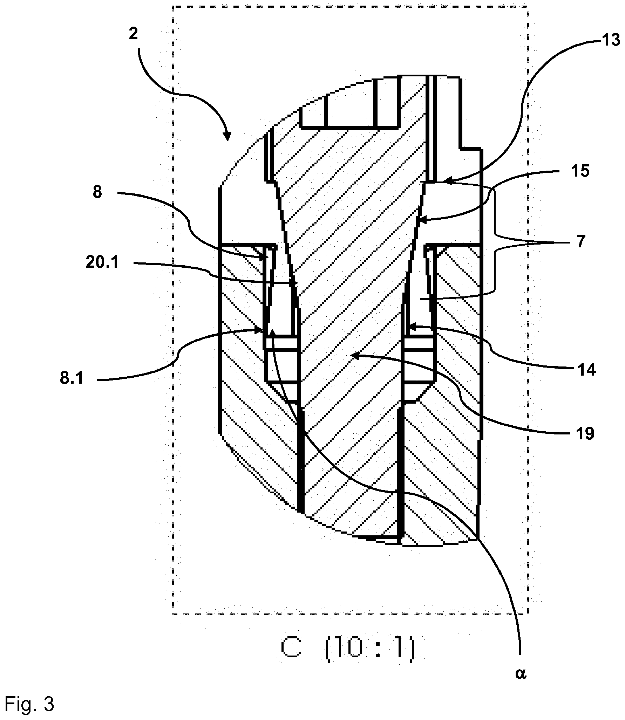

Das Abutment der **Figuren 1a, 1b** und **1c** weist vier axiale Schlitze auf, die in kreisförmigen Ausnehmungen **6** im mittleren Bereich **4.2** des Schaftes enden. Der Sockel **3** liegt mit seiner planaren Unterseite **3.2** auf der Stirnseite **1.1** eines Implantates **1** auf. Die innere Oberfläche **15** der Seitenwand **10** des Schaftes **4** ist teilweise im mittleren und unteren Bereich des Schaftes **4** konisch **7** ausgebildet und verjüngt sich nach terminal, s. **Fig. 3****.** Das Scanabutment **2** ist mit einer Schraube **19** mit Schraubenkopf **21** auf dem Implantat **1** verschraubt. Im unteren Bereich **4.3** ist die Seitenwand mit einer äußeren Kante **8.1** und einem Hinterschnitt **8,** wie in **Figuren 1a** und **3** dargestellt, am äußeren Umfang versehen. Wie in **Figur 3** dargestellt kann die innere Oberfläche der Seitenwand im unteren subterminalen bis terminalen Bereich eine Aufweitung oder kreiszylindrische Form der inneren Oberfläche **14** gegenüber dem darüber liegenden konischen Bereich aufweisen. Des Weiteren ist in **Figur 3** der Absatz **13** zur Aufnahme des Schrauben- **19** oder Bolzenkopfes **22** am inneren Umfang der Seitenwand im mittleren Bereich **4.2** des Schaftes **4** vorgesehen.

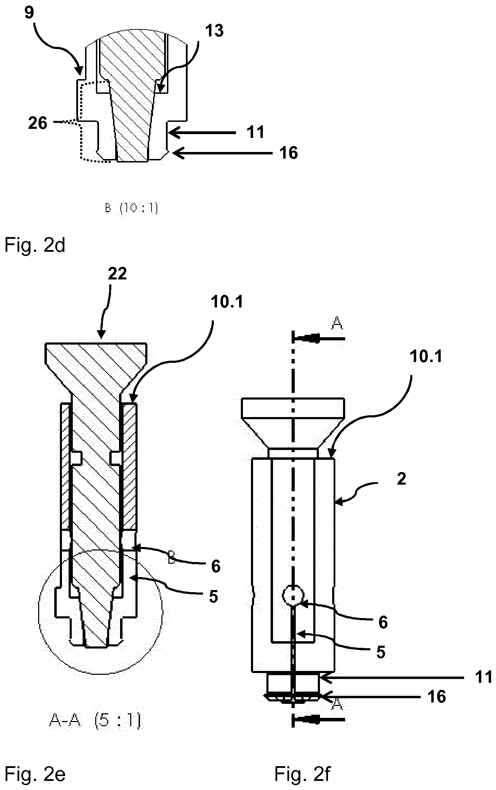

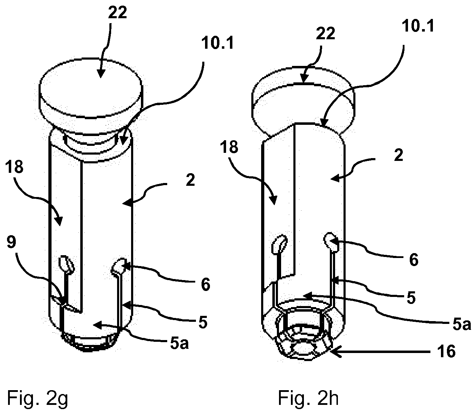

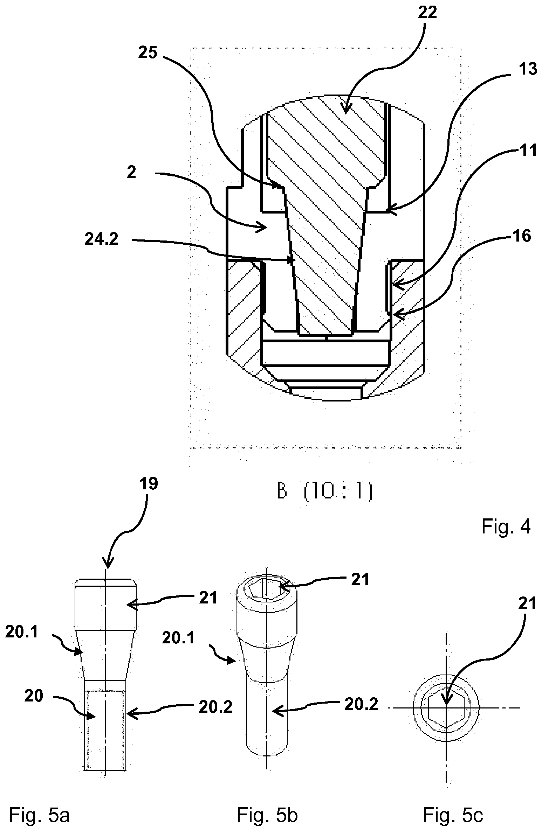

Die **Figuren 2a, 2b, 2c****,** **2d, 2e, 2f****,** **2g, 2h** und **4** zeigen ein alternatives Scanabutment **2** das mit einem Bolzen **22** auf der Stirnseite **1.1** eines Implantates**1** festgeklemmt ist. Die **Figur 2a** stellt dar ein Scanabutment **2** mit einem Bolzen **22.** Das Scanabutment **2** hat einen Schaft **4** mit einem oberen Bereich **4.1,** mittleren Bereich **4.2** und unteren Bereich **4.3,** analog dem Scanabutment der **Figuren 1a, 1b, 1c** und **3****,** wobei der Schaft **4** bzw. die Seitenwand **10** insgesamt vier um 90° versetzte, axiale Schlitze **5,** mit kreisrunden Ausnehmungen **6** an ihren oberen Enden aufweist, in denen die Schlitze **5** enden. Im mittleren Bereich **4.2** des Schaftes **4** ist ein Sockel **3** dargestellt, der eine nicht umlaufende Fläche **9** aufweist, insbesondere in Form einer planaren Fläche **18** wie in den Figuren 2g und 2h dargestellt oder in Form eines Bogensegmentes aufgrund einer Durchbrechung der Seitenwand **10** des Schaftes **4** (nicht dargestellt). Im unteren Bereich **4.3** weist der Schaft beispielsweise einen zylindrischen, vorzugsweise Aussen-6-Kant- oder 8-Kantumfang **11** auf, um in die entsprechende 8- oder 6-Kant-Innen-Geometrie eines Implantates **1** aufgenommen werden zu können. Gleichfalls kann der Schaft erfindungsgemäß eine anders geartete Anschlussgeometrie aufweisen, wie z.B. eine zylindrische mit 3 auf 120° versetzten Nasen oder eine sternförmige Anschlussgeometrie. Am terminalen äußeren Umfang des unteren Bereiches **4.3** des Schaftes ist eine äußere Nase **16** vorgesehen, die durch die Aufnahme und das Verklemmen des Bolzens **22** gegen die Innenwand des Implantates gedrückt wird. Durch das Eindrücken und Verklemmen des Bolzens **22** wird das Scanabutment **2** automatisch koaxial zum Implantat **1** ausgerichtet und befestigt.

Des Weitern weist der Schaft **4** eine zumindest teilweise konische Ausführung 7 der inneren Oberfläche der Seitenwand **10** im mittleren und unteren Bereich **4.2, 4.3** auf, die sich in Richtung auf die Unterseite des Scanabutments verjüngt. Der konische Bereich **7** ist an den konischen Bereich **26** des Schaftes **24** angepasst. Ferner ist in **Figuren 2c****,** **2d** und **4** ein Absatz **13** am inneren Umfang der Seitenwand **10** im mittleren Bereich **4.2** des Schaftes **4** vorgesehen, der zur Aufnahme eines am Schaft **24** des Bolzens vorgesehenen umlaufenden Absatzes **25** ausgebildet ist. Der Bolzen **22** verfügt über eine umlaufende Nut **24.1** in die der O-Ring **17** beim Einschieben des Bolzens **22** in das Scanabutment **2** verrastet wird. In den **Figuren 2b****,** **2e****,** **2f****,** **2g** und **2h** ist die Oberseite **10.1** des Scanabutments als planare, scannbare Fläche ausgebildet. Des Weiteren sind die beidseitig der Schlitze gebildeten Schenkel 5a dargestellt, die der axialen oder konzentrischen Ausrichtung des Scanabutments in der Anschluss-geometrie des Implantates dienen.

**Figuren 2d, 2e** und **2f** stellen den Ausschnitt gemäß **Figur 2c** ohne Implantat dar, in dem der konische Bereich **26** des Bolzens sowie der Absatz **13** im Schaft **4,** der polygonale äußere Umfang **11** des Schaftes **4** im unteren Bereich **4.3** der Seitenwand **10,** insbesondere als Aussen-6- oder 8-Kant, da Implantate häufig als Verdrehschutz eine Innen-6- oder 8-Kant Anschlussgeometrie aufweisen sowie die äußere(n) Nase(n) **16** subterminal bis terminal am äußeren Umfang der Seitenwand **10** des Schaftes **4,** oder umlaufend von Schlitz zu Schlitz, bzw. nach außen weisende Nase, vorzugsweise eine mit einer spitzen Kante versehene Nase.

**Fig. 3** zeigt einen Ausschnitt des Scanabutments **2** mit Schraube **19** der **Figur 1c****.** Die Schraube **19** weist eine konische Ausführung, d.h. konischen Bereich, **7** der inneren Oberfläche der Seitenwand **10** auf, die sich in Richtung der Unterseite des Scanabutments verjüngt. Ferner ist der Hinterschnitt **8** am äußeren Umfang im unteren Bereich **4.3** des Schaftes **10** bzw. der Seitenwand **10** dargestellt mit der äußeren Kante **8.1,** wobei die äußere Kante einen Innenwinkel alpha (α) kleiner 90° aufweist, bis zu einem spitzen Innenwinkel. **14** stellt die zylindrische innere Oberfläche oder die innere Aufweitung nach terminal der inneren Oberfläche der Seitenwand **10** des Schaftes unterhalb der konischen Ausführung **7** dar, der inneren Oberfläche **15** der Seitenwand **10** des Schaftes **4** dar. Ferner ist der konische äusserer Umfang **20.1** des Schaftes **20** der Schraube **19** dargestellt.

**Fig. 4** zeigt einen Ausschnitt der **Figur 2c** des Scanabutments **2** mit einen Absatz **13** in der inneren Oberfläche der Seitenwand **10** des Schaftes **4** oberhalb der konischen Ausführung und polygonalem äußeren Umfang **11** des Schaftes **4** im unteren Bereich **4.3** und mit Nase **16.** Ebenso ist der Bolzen **22** dargestellt, der im unteren Bereich einen Absatz **25** aufweist an dem sich der Bolzen nach unten nach terminal konisch **24.2** verjüngt.

In **Fig. 5** ist eine erfindungsgemäße Schraube **19** mit Schraubenkopf **21** und Schaft der Schraube **20** dargestellt, die einen konischen äußeren Umfang **20.1** des Schaftes **20** und einen zylindrischen äußeren Umfang **20.2** des Schaftes **20** aufweist, der unterhalb des konischen Bereiches, zumindest teilweise ein Außengewinde aufweist. Vorzugsweise ist das Außengewinde terminal, vorzugsweise subterminal am Schaft angeordnet. Der Schraubenkopf **21** kann eine Innen-6/8-Kant oder Torx-Geometrie aufweisen.

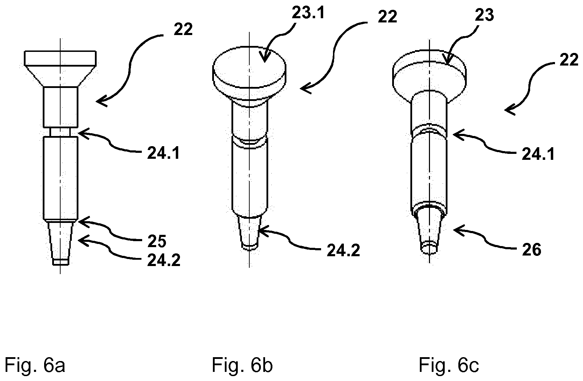

**Fig. 6** stellt einen erfindungsgemäßen Bolzen **22,** mit Bolzenkopf **23** und im Bereich des äußeren Umfangs des Schaftes **24** mit einer Nut **24.1,** insbesondere einer umlaufenden Nut **24.1** dar, wobei der Bolzen im unteren Bereich einen Absatz **25** aufweist an dem sich der Bolzen nach unten verjüngt, und der Bolzen sich nach terminal konisch **24.2** verjüngt. Der Bolzen weist einen konischen Bereich **26** am Schaft auf. Die Oberseite des Bolzens **23.1** ist insbesondere als planare Ebene oder Fläche ausgebildet.

### Bezugszeichen:

- 1: Implantat, Stirnseite (1.1) des Implantates (1)
- 2: Scanabutment
- 3: Sockel der Sockel (3) mit zumindest einem Teil seiner Unterseite (3.2)
- 4: Schaft mit Schlitzen (5) und Ausnehmung (6) am oberen Ende der Schlitze,
- 4.1: oberer Bereich des Schaftes (4.1) bzw. der Seitenwand (10) oberhalb des Schlitzes (5) und der Ausnehmung (6), Höhe oberer Bereich (U)
- 4.2: mittlerer Bereich des Schaftes (4.2) bzw. der Seitenwand (10) umfassend die Schlitze (5) und die Ausnehmungen (6) sowie den Sockel (3), Höhe mittlerer Bereich (V)
- 4.3: unterer Bereich des Schaftes (4.3) bzw. der Seitenwand (10), insbesondere mit Anschlussgeometrie, um Abutment in einer Anschlussgeometrie eines Implantates zu befestigen, Höhe unterer Bereich (W)
- 5: Schlitze in der Seitenwand (10) des Schaftes (4) im Bereich 4.2 und/oder 4.3 bis terminal,
- 5a: Schenkel
- 6: Ausnehmungen im oberen Bereich des Schlitzes (5)
- 7: konische Ausführung der inneren Oberfläche der Seitenwand (10), die sich in Richtung der Unterseite des Scanabutments verjüngt, konischer Bereich
- 8: Hinterschnitt am äußeren Umfang im unteren Bereich 4.3 des Schaftes (10) bzw. der Seitenwand (10), 8.1 äußere Kante, wobei die äußere Kante einen Innenwinkel alpha (α) kleiner 90° aufweist, bis zu einem spitzen Innenwinkel,
- 9: planare Fläche
- 10: Seitenwand die Schaft bildet bzw. Seitenwand des Schaftes; 10.1 Oberseite der Seitenwand, insbesondere mit planarer Ebene oder Fläche
- 11: polygonaler äußere Umfang des Schaftes (4) im unteren Bereich (4.3) der Seitenwand (10), insbesondere als Aussen-6- oder 8-Kant, da Implantate häufig als Verdrehschutz eine Innen-6- oder 8-Kant Anschlussgeometrie aufweisen.
- 13: Absatz in der inneren Oberfläche der Seitenwand (10) des Schaftes (4) oberhalb der konischen Ausführung (7)
- 14: zylindrische innere Oberfläche oder innere Aufweitung nach terminal der inneren Oberfläche der Seitenwand (10) des Schaftes unterhalb der konischen Ausführung (7)
- 15: innere Oberfläche der Seitenwand (10) des Schaftes (4)
- 16: äußere Nase subterminal bis terminal am äußeren Umfang der Seitenwand (10) des Schaftes (4), oder umlaufend von Schlitz zu Schlitz, bzw. nach außen weisende Nase, vorzugsweise eine mit einer spitzen Kante versehene Nase,
- 17: O-Ring
- 18: planare Fläche der Seitenwand des Schaftes
- 19: Schraube
- 20: Schaft der Schraube
- 20.1: konischer äußerer Umfang des Schaftes (20) der Schraube 19
- 20.2: zylindrischer äußerer Umfang des Schaftes (20) der Schraube 10 unterhalb 20.1 mit Außengewinde
- 21: Schraubenkopf insbesondere mit Innen-6/8-Kant Anschlussgeometrie
- 22: Bolzenmit Bolzenkopf (23) und im Bereich des äußeren Umfangs-Schaftes (24) des Bolzens eine Nut (24.1), insbesondere eine umlaufende Nut (24.1), wobei der Bolzen im unteren Bereich einen Absatz (25) aufweisen kann an dem sich der Bolzen nach unten verjüngt, und der Bolzen sich nach terminal konisch (24.2) verjüngt; 23.1 Oberseite des Bolzens, insbesondere mit planare Ebene oder Fläche, 26 konischer Bereich des Schaftes des Bolzen
- A: axiale Ebene des Schaftes (4)
- B: axiale Ebene des Schaftes (4)

## Patentansprüche

1. Scanabutment (2) zur Bestimmung der Lage (x,y,z-Koordinaten) der Stirnseite (1.1) eines dentalen enossalen Implantates (1), wobei das Abutment (2) einen länglichen, hohlen Schaft (4) aufweist, wobei der Schaft (4) einen oberen Bereich (4.1), einen mittleren Bereich (4.2) und einen unteren Bereich (4.3) aufweist, wobei der Schaft (4) im mittleren Bereich (4.2) einen Sockel (3) mit einer planaren Unterseite (3.2) aufweist, an die sich der untere Bereich (4.3) des Schaftes (4) anschließt, und der Schaft (4) mit zumindest einem Teil der Unterseite (3.2) des mittleren Bereichs (4.2) auf die Stirnseite (1.1) des Implantates (1) anbringbar ist und der untere Bereich (4.3) in die Anschluss-Geometrie des Implantates einbringbar ist, und der längliche, hohle Schaft (4) aus einer Seitenwand (10) gebildet wird,
wobei der Schaft (4) in seinem mittleren Bereich (4.2) und unterem Bereich (4.3) in der Seitenwand (10) mindestens zwei Schlitze (5) aufweist, die in der Seitenwand bis nach terminal an die Unterseite des Schaftes verlaufen, wobei das Scanabutment werkstoffeinstückig ist.

2. Scanabutment nach Anspruch 1, **dadurch gekennzeichnet,**
**dass** der Schaft (4) in seinem mittleren Bereich (4.2) und unterem Bereich (4.3) in der Seitenwand (10) mindestens zwei bis terminal verlaufende
a) axiale Schlitze (5) aufweist, insbesondere axiale und parallele Schlitze (5) aufweist oder
b) Schlitze, die gegenüber einer axialen Ausrichtung geneigt sind aufweist, insbesondere sind die Schlitze von 10° bis 30° gegenüber der Längsachse geneigt.

3. Scanabutment nach Anspruch 1 oder 2, **dadurch gekennzeichnet,**
**dass** die Schlitze (5) an ihrem oberen Ende in einer Ausnehmung (6) in der Seitenwand (10) enden und in der Seitenwand (10) bis terminal an die Unterseite des Schaftes (4) verlaufen.

4. Scanabutment nach einem der Ansprüche 1 bis 3, **dadurch gekennzeichnet,**
**dass** der Schaft (4)
a) mindestens zwei axiale Schlitze (5) aufweist, die in einer ersten axialen Ebene (B) oder einer zweiten axialen Ebene (A) des Schaftes liegen, oder
b) mindestens vier axiale Schlitze (5) aufweist, die in der ersten axialen Ebene (B) und der zweiten axialen Ebene (A) des Schaftes liegen.

5. Scanabutment nach einem der Ansprüche 1 bis 4, **dadurch gekennzeichnet,**
**dass** die Seitenwand (10) des unteren Bereichs (4.3) des Schaftes (4) mindestens einen äußeren Durchmesser aufweist, der kleiner ist als der Durchmesser der Seitenwand (10) des mittleren (4.2) und optional des oberen (4.1) Bereiches, und wobei die Seitenwand (10) des unteren Bereiches (4.3) in ihrem äußeren Umfang in Richtung auf den mittleren Bereich (4.2) der Seitenwand (10) mindestens einen Hinterschnitt (11) aufweist.

6. Scanabutment nach einem der Ansprüche 1 bis 5, **dadurch gekennzeichnet, dass** die Seitenwand (10) des unteren Bereiches (4.3) subterminal bis terminal an ihrem äußeren Umfang mindestens eine nach außen weisende Kante (8.1) an der Seitenwand (10) aufweist.

7. Scanabutment nach einem der Ansprüche 1 bis 6, **dadurch gekennzeichnet,**
**dass** die innere Oberfläche (15) der Seitenwand (10) des mittleren Bereiches (4.2) und optional des unteren Bereichs (4.3) konisch (7) ausgeführt ist und sich der Konus in terminaler Richtung zur Unterseite des Scanabutments (4) verjüngt.

8. Scanabutment nach einem der Ansprüche 1 bis 7, **dadurch gekennzeichnet,**
**dass** im oberen Bereich (4.1) des Schaftes (4) ein O-Ring (17) angeordnet ist.

9. Scanabutment nach einem der Ansprüche 1 bis 8, **dadurch gekennzeichnet,**
**dass** die Seitenwand (10) des unteren Bereichs (4.3) des Schaftes (4) mindestens einen äußeren Durchmesser aufweist, der kleiner ist als der Durchmesser der Seitenwand (10) des mittleren (4.2) und optional des oberen (4.1) Bereiches, und wobei die Seitenwand (10) des unteren Bereiches (4.3) subterminal bis terminal an ihrem äußeren Umfang eine nach außen weisende Nase (16) an der Seitenwand (10) aufweist.

10. Kit umfassend mindestens ein Scanabutment nach einem der Ansprüche 1 bis 9 und entweder mindestens eine dentale Schraube (19) oder einen dentalen Bolzen (22)
wobei die Schraube einen Schraubenkopf (21) aufweist, insbesondere mit einer polygonalen Innenkant- oder Torx-Geometrie, und unterhalb des Schraubenkopfes ein Schaft angeordnet ist, wobei der Schaft zumindest in einem Bereich ein Außengewinde aufweist, wobei sich der Schaft (20) der Schraube an seinem äußeren Umfang (20.1) zumindest teilweise in Richtung auf das untere Ende der Schraube konisch (20.1) verjüngt,
wobei der Bolzen (22) einen Bolzenkopf (23) und unterhalb des Bolzenkopfes einen Schaft (24) aufweist, wobei im Bereich des äußeren Umfangs des Schaftes (24) des Bolzens eine Nut (24.1) angeordnet ist, und wobei der Bolzen im unteren Bereich des Schaftes (24) einen Absatz (25) aufweist, an dem der Schaft (24) sich weiter verjüngt, und der Schaft (24) sich unterhalb des Absatzes zumindest teilweise konisch nach terminal (24.2) verjüngt.

## Claims

1. Scan abutment (2) for determining the position (x,y,z-coordinates) of the front face (1.1) of a dental endosseous implant (1), the abutment (2) having an elongated, hollow shaft (4), the shaft (4) having an upper region (4.1), a central region (4.2) and a lower region (4.3), the shaft (4) having a pedestal (3) in the central region (4.2) having a planar bottom side (3.2), the lower region (4.3) of the shaft (4) adjoining to which, and the shaft (4) with at least a part of the bottom side (3.2) of the central region (4.2) being attachable onto the front face (1.1) of the implant (1), and the lower region (4.3) being insertable into the connection geometry of the implant, and the elongated, hollow shaft (4) being formed from a side wall (10),
the shaft (4), in its central region (4.2) and lower region (4.3), having at least two slits (5) in the side wall (10) extending in the side wall in terminal direction to the bottom side of the shaft, the scan abutment being an integral piece of material.

2. Scan abutment according to claim 1, **characterised in**
**that** the shaft (4), in its central region (4.2) and lower region (4.3), has at least two
a) axial slits (5), in particular axial and parallel slits (5), in the side wall (10) extending in terminal direction, or
b) slits in the side wall (10) extending in terminal direction, being inclined with respect to an axial orientation, in particular the slits are inclined from 10° to 30° with respect to the longitudinal axis.

3. Scan abutment according to claim 1 or 2, **characterised in**
**that** the slits (5), at their upper end, end up in a recess (6) in the side wall (10) and extend in the side wall (10) in terminal direction to the bottom side of the shaft (4).

4. Scan abutment according to any one of claims 1 to 3, **characterised in**
**that** the shaft (4)
a) has at least two axial slits (5) being situated in a fist axial plane (B) or a second axial plane (A) of the shaft, or
b) has at least four axial slits (5) being situated in the first axial plane (B) and the second axial plane (A) of the shaft.

5. Scan abutment according to any one of claims 1 to 4, **characterised in**
**that** the side wall (10) of the lower region (4.3) of the shaft (4) has at least one outer diameter being smaller than the diameter of the side wall (10) of the central (4.2) and, optionally, of the upper (4.1) region, and the side wall (10) of the lower region (4.3), in its outer periphery, having at least one undercut (11) in the direction to the central region (4.2) of the side wall (10).

6. Scan abutment according to any one of claims 1 to 5, **characterised in**
**that** the side wall (10) of the lower region (4.3), subterminally to terminally at its outer periphery, has at least one outwardly facing edge (8.1) on the side wall (10).

7. Scan abutment according to any one of claims 1 to 6, **characterised in**
**that** the inner surface (15) of the side wall (10) of the central region (4.2) and, optionally, of the lower region (4.3) is conically (7) designed, and the cone tapers in terminal direction to the bottom side of the scan abutment (4).

8. Scan abutment according to any one of claims 1 to 7, **characterised in**
**that** an O-ring (17) is arranged in the upper region (4.1) of the shaft (4).

9. Scan abutment according to any one of claims 1 to 8, **characterised in**
**that** the side wall (10) of the lower region (4.3) of the shaft (4) has at least one outer diameter being smaller than the diameter of the side wall (10) of the central (4.2) and, optionally, of the upper (4.1) region, and the side wall (10) of the lower region (4.3), subterminally to terminally at its outer periphery, having an outwardly facing nose (16) on the sidewall (10).

10. Kit comprising at least one scan abutment according to any one of claims 1 to 9 and either at least one dental screw (19) or a dental bolt (22),
the screw having a screw head (21), in particular having a polygonal inside-socket- or torx-geometry, and a shaft being arranged below the screw head, the shaft having an external thread in at least one region, the shaft (20) of the screw, at its outer periphery (20.1), conically (20.1) tapers at least in part in the direction to the lower end of the screw,
the bolt (22) having a bolthead (23) and a shaft (24) below the bolt head, a groove (24.1) being arranged in the region of the outer periphery of the shaft (24) of the bolt, and the bolt having a platform (25) in the lower region of the shaft (24), the shaft (24) further tapering at which, and the shaft (24) conically tapers at least in part in terminal direction (24.2) below the platform.

## Revendications

1. Pilier de scannage (2) pour déterminer la position (coordonnées x,y,z) de la face avant (1.1) d'un implant endo-osseux dentaire (1), le pilier (2) ayant une tige creuse élongée (4), la tige (4) ayant une région supérieure (4.1), une région centrale (4.2) et une région inférieure (4.3), la tige (4) ayant un piédestal (3) dans la région centrale (4.2) ayant un côté inférieur planaire (3.2), dont la région inférieure (4.3) de la tige (4) joignant, et la tige (4) avec au moins une partie du côté inférieur (3.2) de la région centrale (4.2) étant attachable sur la face avant (1.1) de l'implant (1), et la région inférieure (4.3) étant insérable dans la géométrie de raccordement de l'implant, et la tige creuse élongée (4) étant formée d'une paroi latérale (10),
la tige (4), dans sa région centrale (4.2) et région inférieure (4.3), ayant au moins deux fentes (5) dans la paroi latérale (10), étendant dans la paroi latérale en direction terminale au côté inférieur de la tige, le pilier de scannage étant une pièce intégrale de matériau.

2. Pilier de scannage selon la revendication 1, **caractérisé en ce**
**que** la tige (4), dans sa région centrale (4.2) et région inférieure (4.3), a au moins deux
a) fentes axiales (5), en particulier fentes axiales et parallèles (5), dans la paroi latérale (10) étendant en direction terminale, ou
b) fentes dans la paroi latérale (10) étendant en direction terminale, étant inclinées par rapport à une orientation axiale, en particulier les fentes sont inclinées de 10° à 30° par rapport à l'axe longitudinal.

3. Pilier de scannage selon la revendication 1 ou 2, **caractérisé en ce**
**que** les fentes (5), a leur extrémité supérieure, terminent dans une encoche (6) dans la paroi latérale (10) et étend dans la paroi latérale (10) en direction terminale au côté inférieur de la tige (4).

4. Pilier de scannage selon l'une des revendications 1 à 3, **caractérisé en ce**
**que** la tige (4)
a) a au moins deux fentes axiales (5) étant situées dans un premier plan axial (B) ou un deuxième plan axial (A) de la tige, ou
b) a au moins quatre fentes axiales (5) étant situées dans le premier plan axiale (B) et le deuxième plan axiale (A) de la tige.

5. Pilier de scannage selon l'une des revendications 1 à 4, **caractérisé en ce**
**que** la paroi latérale (10) de la région inférieure (4.3) de la tige (4) a au moins un diamètre extérieur étant plus petit que le diamètre de la paroi latérale (10) de la région centrale (4.2) et, facultativement, de la région supérieur (4.1), et la paroi latérale (10) de la région inférieure (4.3), dans sa périphérie extérieure, ayant au moins une contre-dépouille (11) dans la direction vers la région centrale (4.2) de la paroi latérale (10).

6. Pilier de scannage selon l'une des revendications 1 à 5, **caractérisé en ce**
**que** la paroi latérale (10) de la région inférieure (4.3), subterminalement à terminalement à sa périphérie extérieure, a au moins un arête (8.1) tourné vers l'extérieur sur la paroi latérale (10).

7. Pilier de scannage selon l'une des revendications 1 à 6, **caractérisé en ce**
**que** la surface intérieure (15) de la paroi latérale (10) de la région centrale (4.2) et, facultativement, de la région inférieure (4.3) est dessinée conique (7), et le cône se rétrécit en direction terminale au côté inférieur du pilier de scannage (4).

8. Pilier de scannage selon l'une des revendications 1 à 7, **caractérisé en ce**
**qu'**une anneau O (17) est arrangée dans la région supérieure (4.1) de la tige (4).

9. Pilier de scannage selon l'une des revendications 1 à 8, **caractérisé en ce**
**que** la paroi latérale (10) de la région inférieure (4.3) de la tige (4) a au moins un diamètre extérieur étant plus petit que le diamètre de la paroi latérale (10) de la région centrale (4.2) et, facultativement, de la région supérieur (4.1), et la paroi latérale (10) de la région inférieure (4.3), subterminalement à terminalement à sa périphérie extérieure, ayant au moins un nez (16) tourné vers l'extérieur sur la paroi latérale (10).

10. Kit comprenant au moins un pilier de scannage selon l'une des revendications 1 à 9 et soit au moins un vis dentaire (19) soit un boulon dentaire (22),
le vis ayant une tête de vis (21), en particulier ayant une géométrie polygonale interne ou torx, et une tige étant arrangé en dessous de la tête de vis, la tige ayant un filetage extérieur dans au moins une région, la tige (20) de la vis, a sa périphérie extérieure (20.1), se rétrécit coniquement (20.1] au moins en partie dans la direction vers l'extrémité inférieure de la vis,
le boulon (22) ayant une tête de boulon (23) et une tige (24) en dessous de la tête de boulon, une rainure (24.1) étant arrangée dans la région de la périphérie extérieure de la tige (24) du boulon, et le boulon ayant une plate-forme (25) dans la région inférieure de la tige (24) dont la tige (24) se rétrécit en outre, et la tige (24) se rétrécit coniquement au moins en partie en direction terminale (24.2) en dessous de la plate-forme.
